# EUROPEAN PATENT APPLICATION

(11) **EP 4 243 407 A1**
(43) Date of publication of application: **13.09.2023**
(21) Application number: 21891053.7
(22) Date of filing: 05.11.2021
(51) Int. Cl.: H04N 7/15

(54) **AUDIO/VIDEO FORWARDING METHOD AND APPARATUS, TERMINALS, AND SYSTEM**

(30) Priority: 11.11.2020 CN 202011257786
(71) Applicant: ZTE Corporation, Shenzhen, Guangdong 518057 (CN)
(72) Inventor: ZHU, Jingsheng, Shenzhen, Guangdong 518057 (CN); MEI, Junjun, Shenzhen, Guangdong 518057 (CN); ZHAO, Zhidong, Shenzhen, Guangdong 518057 (CN); GUAN, Dan, Shenzhen, Guangdong 518057 (CN); MENG, Tianliang, Shenzhen, Guangdong 518057 (CN)
(74) Representative: Canzler & Bergmeier Patentanwälte Partnerschaft mbB
(86) International application number: PCT/CN2021/129041
(87) International publication number: WO 2022/100528

(57) **Abstract**

An audio/video forwarding method and apparatus, terminals, and a system. The method comprises: during a session between a first sending terminal and a first receiving terminal, acquiring a plurality of first video streams and a plurality of first audio streams sent from the first sending terminal (S302); determining, according to terminal parameters of the first receiving terminal and the network bandwidth used by the first receiving terminal, a first target video stream and a first target audio stream from among the plurality of first video streams and the plurality of first audio streams, respectively (S304), the first target video stream being the video stream having the highest resolution supported by the first receiving terminal among the plurality of first video streams, and the first target audio stream being the audio stream having the best sound quality supported by the first receiving terminal among the plurality of first audio streams; and sending the first target video stream and the first target audio stream to the first receiving terminal (S306).

## Description

### CROSS-REFERENCE TO RELATED APPLICATION

This application is filed on the basis of Chinese patent application 202011257786.7 filed November 11, 2020, and claims priority to the Chinese patent application, the entire contents of which are incorporated herein by reference.

### TECHNICAL FIELD

Embodiments of the present disclosure relate to the field of communication, and in particular to an audio/video forwarding method, device, terminal and system.

### BACKGROUND

In some cases, in the video conference process, a multi-party conference is usually involved, so a forwarding server needs to forward the video content of each party to other participating parties. Due to different hardware devices of the participating parties, videos may have many different formats. The forwarding server needs to forward audios/videos with different formats or resolutions to different participating parties, and in this process, it may involve the situation where a participating party cannot receive high-resolution videos because the participating party does not support a certain format of video or a network of the participating party is unstable, so that the participating party is unable to play the videos in the video conference, which affects the stability of the conference.

### SUMMARY

In view of the above, embodiments of the present disclosure provide an audio/video forwarding method, device, terminal and system.

According to an embodiment of the present disclosure, provided is an audio/video forwarding method. The method includes: acquiring, during a session performed between a first sending terminal and a first receiving terminal, a plurality of first video streams and a plurality of first audio streams sent by the first sending terminal, where different first video streams have different formats or resolutions, contents corresponding to the plurality of first video streams are identical, different first audio streams have different formats, and contents corresponding to the plurality of first audio streams are identical; determining a first target video stream from the plurality of first video streams and a first target audio stream from the plurality of first audio streams according to a terminal parameter of the first receiving terminal and a network bandwidth utilized by the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams; and sending the first target video stream and the first target audio stream to the first receiving terminal.

According to another embodiment of the present disclosure, provided is an audio/video forwarding method. The method includes: acquiring, during a session performed between a first sending terminal and a first receiving terminal, a plurality of first video streams and a plurality of first audio streams, where different first video streams have different formats or resolutions, contents corresponding to the plurality of first video streams are identical, different first audio streams have different formats, and contents corresponding to the plurality of first audio streams are identical; sending the plurality of first video streams to a server, so that the server determines a first target video stream from the plurality of first video streams and a first target audio stream from the plurality of first audio streams, and sending the first target video stream and the first target audio stream to the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

According to another embodiment the present disclosure, provided is an audio/video forwarding method. The method includes: receiving, during a session performed between a first sending terminal and a first receiving terminal, by the first receiving terminal, a first target video stream and a first target audio stream sent by a server, where the first target video stream is a video stream determined by the server from a plurality of first video streams, the first target audio stream is an audio stream determined from a plurality of first audio streams, the first target video stream is a video stream with the highest resolution supported for playing by the first receiving terminal among the plurality of first video streams, the first target audio stream is an audio stream with the best sound quality supported for playing by the first receiving terminal among the plurality of first audio streams, different first video streams have different formats or resolutions, contents corresponding to the plurality of first video streams are identical, the plurality of first audio streams are audio streams sent to the server by the first sending terminal, different first audio streams have different formats, and contents corresponding to the plurality of first audio streams are identical; and playing, by the first receiving terminal, the first target video stream and the first target audio stream.

According to another embodiment of the present disclosure, provided is an audio/video forwarding device. The device includes: a first acquisition unit, configured to acquire, during a session performed between a first sending terminal and a first receiving terminal, a plurality of first video streams and a plurality of first audio streams sent by the first sending terminal, where different first video streams have different formats or resolutions, contents corresponding to the plurality of first video streams are identical, different first audio streams have different formats, and contents corresponding to the plurality of first audio streams are identical; a first determination unit, configured to determine a first target video stream from the plurality of first video streams and a first target audio stream from the plurality of first audio streams according to a terminal parameter of the first receiving terminal and a network bandwidth utilized by the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams; and a first sending unit, configured to send the first target video stream and the first target audio stream to the first receiving terminal.

According to another embodiment of the present disclosure, provided is an audio/video forwarding device. The device includes: an acquisition unit, configured to acquire, during a session performed between a first sending terminal and a first receiving terminal, a plurality of first video streams and a plurality of first audio streams, where different first video streams have different formats or resolutions, contents corresponding to the plurality of first video streams are identical, different first audio streams have different formats, and contents corresponding to the plurality of first audio streams are identical; and a sending unit, configured to send the plurality of first video streams to a server, so that the server determines a first target video stream from the plurality of first video streams and a first target audio stream from the plurality of first audio streams, and send the first target video stream and the first target audio stream to the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

According to another embodiment of the present disclosure, provided is an audio/video forwarding device. The device includes: a first receiving unit, configured to receive, during a session performed between a first sending terminal and a first receiving terminal, a first target video stream and a first target audio stream sent by a server, where the first target video stream is a video stream determined by the server from a plurality of first video streams, the first target audio stream is an audio stream determined from a plurality of first audio streams, the first target video stream is a video stream with the highest resolution supported for playing by the first receiving terminal among the plurality of first video streams, the first target audio stream is an audio stream with the best sound quality supported for playing by the first receiving terminal among the plurality of first audio streams, different first video streams have different formats or resolutions, contents corresponding to the plurality of first video streams are identical, the plurality of first audio streams are audio streams sent to the server by the first sending terminal, different first audio streams have different formats, and contents corresponding to the plurality of first audio streams are identical; and a first playing unit configured to play the first target video stream and the first target audio stream for the first receiving terminal.

According to another embodiment the present disclosure, provided is an audio/video forwarding system. The system includes: a first acquisition unit, configured to acquire, during a session performed between a first sending terminal and a first receiving terminal, a plurality of first video streams and a plurality of first audio streams sent by the first sending terminal, where different first video streams have different formats or resolutions, contents corresponding to the plurality of first video streams are identical, different first audio streams have different formats, and contents corresponding to the plurality of first audio streams are identical; a first determination unit, configured to determine a first target video stream from the plurality of first video streams and a first target audio stream from the plurality of first audio streams according to a terminal parameter of the first receiving terminal and a network bandwidth utilized by the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams; and a first sending unit, configured to send the first target video stream and the first target audio stream to the first receiving terminal.

According to another embodiment the present disclosure, provided is an audio/video forwarding terminal. The terminal includes: an acquisition unit, configured to acquire a plurality of first video streams and a plurality of first audio streams during a session performed between a first sending terminal and a first receiving terminal, where different first video streams have different formats or resolutions, contents corresponding to the plurality of first video streams are identical, different first audio streams have different formats, and contents corresponding to the plurality of first audio streams are identical; and a sending unit, configured to send the plurality of first video streams and the plurality of first audio streams to a server, so that the server determines a first target video stream from the plurality of first video streams and a first target audio stream from the plurality of first audio streams, and send the first target video stream and the first target audio stream to the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

According to another embodiment of the present disclosure, provided is an audio/video forwarding terminal. The terminal includes: a first receiving unit, configured to receive a first target video stream and a first target audio stream sent by a server during a session performed between a first sending terminal and a first receiving terminal, where the first target video stream is a video stream determined by the server from a plurality of first video streams, the first target audio stream is an audio stream determined by the server from a plurality of first audio streams, the first target video stream is a video stream with the highest resolution supported for playing by the first receiving terminal among the plurality of first video streams, the first target audio stream is an audio stream with the best sound quality supported for playing by the first receiving terminal among the plurality of first audio streams, different first video streams have different formats or resolutions, contents corresponding to the plurality of first video streams are identical, the plurality of first audio streams are audio streams sent to the server by the first sending terminal, different first audio streams have different formats, and contents corresponding to the plurality of first audio streams are identical; and a first playing unit, configured to play the first target video stream and the first target audio stream for the first receiving terminal.

According to yet another embodiment of the present disclosure, further provided is a computer-readable storage medium, storing a computer program which, when executed by a processor, causes the processor to implement any one of the above method embodiments.

According to yet another embodiment of the present disclosure, further provided is an electronic device. The electronic device includes a processor, and a memory storing a computer program which, when executed by the processor, causes the processor to implement any one of the above method embodiments.

### BRIEF DESCRIPTION OF DRAWINGS

Fig. 1 is a hardware structural block diagram of a mobile terminal applying an audio/video forwarding method according to an embodiment of the present disclosure;
Fig. 2 is a network architecture diagram of an audio/video forwarding method according to an embodiment of the present disclosure;
Fig. 3 is a flowchart of an audio/video forwarding method according to an embodiment of the present disclosure;
Fig. 4 is a structural block diagram of a terminal uplink module applied in an audio/video forwarding method according to an embodiment of the present disclosure;
Fig. 5 is a structural block diagram of a terminal downlink module applied in an audio/video forwarding method according to an embodiment of the present disclosure;
Fig. 6 is a structural block diagram of a conference media forwarding server applied in an audio/video forwarding method according to an embodiment of the present disclosure;
Fig. 7 is a block diagram of a model in which terminals send code streams to a conference media forwarding server for forwarding of an audio/video forwarding method according to an embodiment of the present disclosure;
Fig. 8 is a block diagram of a model in which a conference media forwarding server forwards code streams to terminals of an audio/video forwarding method according to an embodiment of the present disclosure;
Fig. 9 is a flowchart of sorting and forwarding of terminal audio volume values of an audio/video forwarding method according to an embodiment of the present disclosure;
Fig. 10 is a flowchart of active stream pushing of a preferred audio of a conference media forwarding server of an audio/video forwarding method according to an embodiment of the present disclosure;
Fig. 11 is a flowchart of active stream pushing of a preferred video of a conference media forwarding server of an audio/video forwarding method according to an embodiment of the present disclosure;
Fig. 12 is a flowchart of switching and forwarding of a media source of an audio/video forwarding method according to an embodiment of the present disclosure;
Fig. 13 is a flowchart of another audio/video forwarding method according to an embodiment of the present disclosure;
Fig. 14 is a flowchart of yet another audio/video forwarding method according to an embodiment of the present disclosure;
Fig. 15 is a structural block diagram of an audio/video forwarding device according to an embodiment of the present disclosure;
Fig. 16 is a structural block diagram of another audio/video forwarding device according to an embodiment of the present disclosure;
Fig. 17 is a structural block diagram of yet another audio/video forwarding device according to an embodiment of the present disclosure;
Fig. 18 is a structural block diagram of an audio/video forwarding system according to an embodiment of the present disclosure;
Fig. 19 is a structural block diagram of an audio/video forwarding terminal according to an embodiment of the present disclosure; and
Fig. 20 is a structural block diagram of another audio/video forwarding terminal according to an embodiment of the present disclosure.

### DETAILED DESCRIPTION

Embodiments of the present disclosure will be described in detail below with reference to the accompanying drawings and in conjunction with the embodiments.

It should be noted that the terms such as "first", "second" and the like in the description, the claims, and the accompanying drawings of the present disclosure are used to distinguish similar objects, and are not necessarily used to describe a specific sequence or a precedence order.

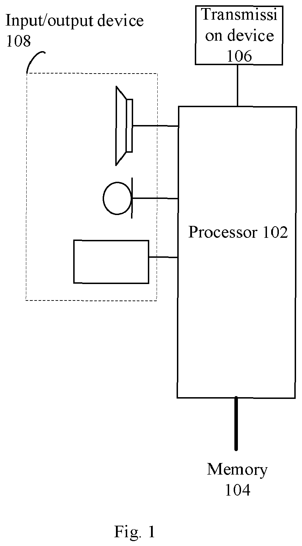

The method embodiment provided in the embodiment of the present disclosure may be performed in a mobile terminal, a computer terminal or a similar computing device. Taking performing on a mobile terminal as an example, Fig. 1 is a hardware structural block diagram of a mobile terminal applying an audio/video forwarding method according to an embodiment of the present disclosure. As shown in Fig. 1, the mobile terminal may include one or more (only one is shown in Fig. 1) processors 102 (the processor 102 may include, but not limited to a processing device such as a Microcontroller Unit (MCU), a Field Programmable Gate Array (FPGA) or the like) and a memory 104 for storing data. The mobile terminal may further include a transmission device 106 and an input/output device 108 for communication functions. Those having ordinary skills in the art can understand that the structure shown in Fig. 1 is only schematic, and does not constitute a limitation to the structure of the above-mentioned mobile terminal. For example, the mobile terminal may further include more or fewer components than shown in Fig. 1, or have a different configuration from that shown in Fig. 1.

The memory 104 may be configured to store computer programs, for example, software programs and modules of application software, such as computer programs corresponding to the audio/video forwarding method in the embodiment of the present disclosure. The processor 102 executes the computer programs stored in the memory 104 to implement various functional applications and data processing, that is, implements the above method. The memory 104 may include a high-speed random access memory, and may further include a non-volatile memory, such as one or more magnetic storage devices, flash memories, or other non-volatile solid-state memories. In some examples, the memory 104 may include memories remotely located with respect to the processor 102, and these remote memories may be connected to the mobile terminal through networks. Examples of the above networks include, but not limited to, the Internet, intranet, a local area network, a mobile communication network and combinations thereof.

The transmission device 106 is configured to receive or send data via a network. Specific examples of the above networks may include wireless networks provided by communication providers of the mobile terminal. In an example, the transmission device 106 includes a Network Interface Controller (NIC), which may be connected to other network devices through a base station to communicate with the Internet. In an example, the transmission device 106 may be a Radio Frequency (RF) module, which is configured to communicate with the Internet in a wireless manner.

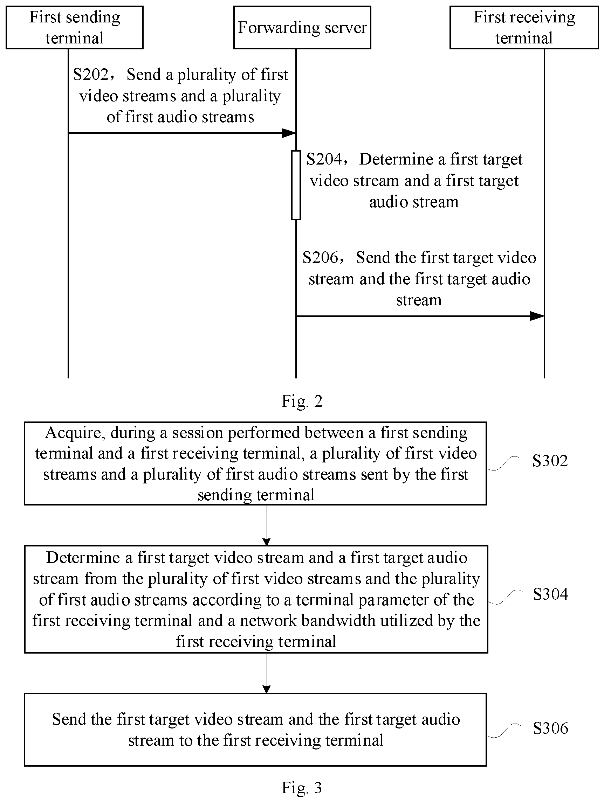

The embodiment of the present disclosure may operate in a network architecture shown in Fig. 2. As shown in fig. 2, the network architecture includes: a first sending terminal, a forwarding server and a first receiving terminal. The first sending terminal encodes video streams into a plurality of first video streams with different formats or resolutions, encodes audio streams into a plurality of first audio streams with different formats, and then sends the plurality of first video streams with different formats or resolutions and the plurality of first audio streams with different formats to the forwarding server. The forwarding server acquires a terminal parameter of the first receiving terminal and a network parameter utilized by the first receiving terminal, and determines a first target video stream with the highest resolution supported by the first receiving terminal from the plurality of first video streams and a first target audio stream with the best sound quality from the plurality of first audio streams. Then, the forwarding server forwards the first target video stream and the first target audio stream to a second sending terminal.

In this embodiment, an audio/video forwarding method operating in the network architecture is provided. Fig. 2 is a flowchart of an audio/video forwarding method according to an embodiment of the present disclosure. As shown in Fig. 3, the method includes following steps S302 to S306.

At S302, during a session performed between a first sending terminal and a first receiving terminal, a plurality of first video streams and a plurality of first audio streams sent by the first sending terminal are acquired, where different first video streams have different formats or resolutions, contents corresponding to the plurality of first video streams are identical, different first audio streams have different formats, and contents corresponding to the plurality of first audio streams are identical.

At S304, a first target video stream is determined from the plurality of first video streams and a first target audio stream is determined from the plurality of first audio streams according to a terminal parameter of the first receiving terminal and a network bandwidth utilized by the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

At S306, the first target video stream and the first target audio stream are sent to the first receiving terminal.

According to the present disclosure, because in the process of forwarding a video from the first sending terminal, a plurality of first video streams with different formats and resolutions sent by the first sending terminal and a plurality of first audio streams with different formats sent by the first sending terminal may be acquired, and which video stream and which audio stream are sent to the first receiving terminal are determined according to a terminal parameter of the first receiving terminal and a network bandwidth utilized by the first receiving terminal, it can be guaranteed that the first receiving terminal plays the best video stream and audio stream that can be supported, solving the problem of not being able to play a video in a video conference, and achieving the effect of improving the stability of the video conference.

The executing subject of the above steps may be the forwarding server.

The method in the present disclosure can be applied in a multi-party cloud conference. In the process of the multi-party cloud conference, each participating party may be a first sending terminal that sends video streams and audio streams, and each participating party may also be a first receiving terminal that receives video streams and audio streams. The server plays a role of data forwarding. A new participating party can join in the conference halfway, and one or some participating parties can withdraw from the conference halfway and re-join after withdrawal.

Illustration is made by way of the following examples. The audio/video forwarding method in the embodiment of the present disclosure may adopt an SFU architecture, a terminal sends supported audio/video media capabilities (including supported formats, resolutions, terminal parameters, and network parameters) to a media forwarding system (forwarding server), and the media forwarding system forwards a code stream with the best quality to the terminal according to the bandwidth and capabilities of the terminal. The terminal has the capabilities of adaptive decoding and encoding in multiple formats, allowing the media forwarding system to simply select the capabilities supported by the terminal. By means of the embodiment of the present disclosure, in a large-capacity conference, a media source can be quickly switched, to achieve the effect of fast and smooth switching, for example, switching a currently watched video of a certain participating party to the video of another participating party to change the participating party being watched.

The terminal in the embodiment of the present disclosure may be a terminal that sends data or may be a terminal that receives data. It should be noted that the terminal may have both the capabilities of the first sending terminal (or the second sending terminal and other sending terminals) and the capabilities of the first receiving terminal (or the second receiving terminal and other receiving terminals). In a multi-party conference, a terminal needs to send its own video to other terminals, and also needs to acquire video content from other terminals.

The sound quality in the embodiment of the present disclosure may be scored by timbre, sound stage, layering, positioning, transparency, analytical power, overall balance, audio and video coagulating power and body sense, and the scoring results are weighted and summed into the score of timbre. The higher the score is, the better the timbre is.

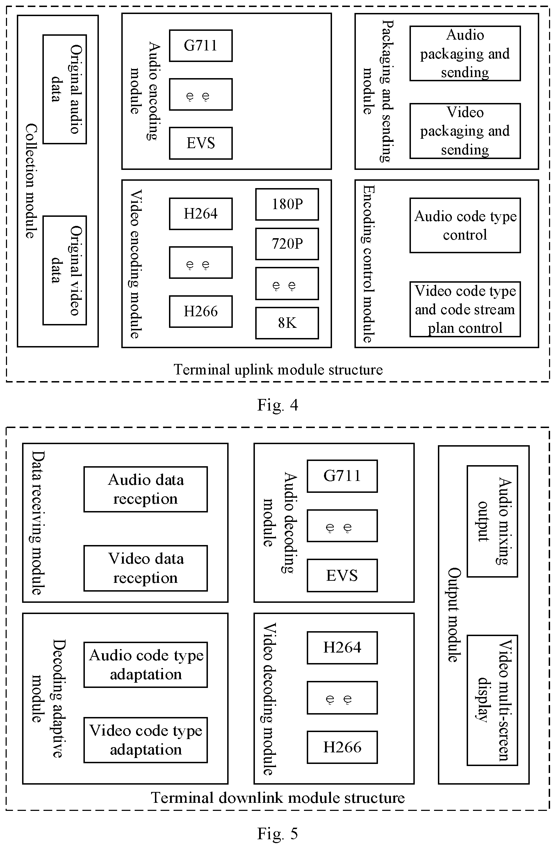

As an embodiment, the terminal includes an uplink module and a downlink module. As shown in Fig. 4, the uplink module includes: a collection module, an audio encoding module, a video encoding module, a packaging and sending module and an encoding control module.

The collection module is configured to collect original audio/video data.

The audio encoding module is configured to encode audio data into a plurality of specified audio formats.

The video encoding module is configured to encode video data into a plurality of specified video formats.

The packaging and sending module is configured to package a plurality of audio streams into multiple channels of streams and send the streams through one port, and package a plurality of video streams into multiple channels of streams and send the streams through one port.

The encoding control module is configured to receive control from a conference media forwarding server, inform the audio/video encoding module to start a required audio/video format for encoding, and change code stream plan of a video. The code stream plan mainly includes information such as resolution, code rate, frame rate, etc.

As shown in Fig. 5, the downlink module includes: a data receiving module, a decoding adaptive module, an audio decoding module, a video decoding module and an output module.

The data receiving module is configured to receive audio/video data and split the audio data into code streams with multiple formats, and split the video data into code streams with multiple formats and multiple resolutions.

The decoding adaptive module is configured to detect formats of audio code streams and start audio decoding according to the detected formats, and detect formats of video code streams and start video decoding according to the detected formats.

The audio decoding module is configured to parse the audio code streams into linear codes and support simultaneous decoding of multiple formats.

The video decoding module is configured to parse video code streams into YUV data and support simultaneous decoding of multiple formats and resolutions.

The output module is configured to mix audio code streams and output the mixed audio code stream to a sound card, and lays out video data and output the laid-out video data to a display card to synchronize the audio and video.

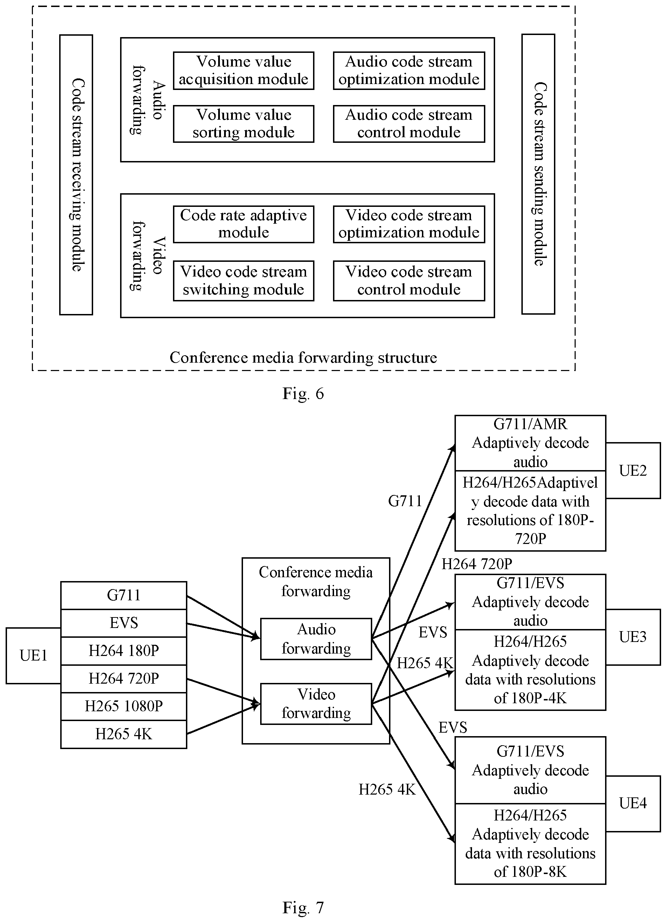

As shown in Fig. 6, the conference media forwarding structure (server) includes: a code stream receiving module, a code stream sending module and an audio forwarding module.

The code stream receiving module is configured to receive the audio/video code streams sent by the terminal and demultiplexes multiple channels of streams.

The code stream sending module is configured to multiplex multiple channels of code streams of the terminal and sends the multiplexed code streams to the terminal.

The audio forwarding module includes: a volume value acquisition module, configured to acquire volume values from a Real-time Transport Protocol (RTP) extension of selected terminal code streams, where in order to be compatible with an old terminal, the volume values may be acquired by decoding; a volume value sorting module, configured to sort all the terminals participating in the conference according to the acquired volume values, select three terminals with the loudest sound, and send the audio of the three terminals to corresponding terminals, respectively; an audio code stream optimization module, configured to select a code stream with the optimal audio format according to a set audio optimization policy through network bandwidth prediction and terminal audio capabilities, and send a code stream with the best sound quality to the terminal; and an audio code stream control module, configured to request the terminal to send or stop sending a code stream with a specified audio format according to the selected audio format.

The video forwarding module includes: a code rate adaptive module, configured to adjust a code rate according to a set code rate policy through network bandwidth prediction and terminal video capabilities, and to be taken over by a video code stream optimization module in a scenario where the code rate cannot meet requirements; the video code stream optimization module, configured to re-select the best encoding format and the best code stream plan according to network bandwidth prediction and the terminal video capabilities; a video code stream control module, configured to request the terminal to send or stop sending a specified code stream according to the selected video format and code stream plan; and a video stream switching module configured to quickly switch a broadcast source when everyone is watching the same broadcast source (one or more terminals) in a conference scenario.

Before or during the conference, the video terminal and the conference media forwarding server negotiate multiple audio/video encoding/decoding capabilities, and the conference media forwarding server selects and sends to the video terminal the best audio/video format and code stream plan according to the negotiated terminal capabilities and network conditions. The video terminal is controlled by the conference media forwarding server to generate code streams with different audio/video formats and different plans. The generated code streams with audio formats and code streams with video formats are respectively multiplexed and sent to the conference media forwarding server for demultiplexing. Then, the media forwarding server sorts the audio code streams according to the volume values, selects top three terminals with the loudest sound, and forwards the audio code streams of the three terminals to other terminals in need; and forwards the video code streams to terminals in need according to code type and plan information. The receiving terminal receives a plurality of audio code streams with different formats, performs adaptive decoding, and mixes sounds; and receives a plurality of video code streams with different formats or code stream plans, performs adaptive decoding, and performs screen layout.

The conference media forwarding server sorts the volume values. When a terminal sends an audio code stream, the volume value is collected and put in an RTP extension. When the conference media forwarding server parses the RTP, the volume value in the RTP extension is acquired. In order to be compatible with the old terminal, the RTP extension carries no volume value and requires decoding to acquire the volume value. In some embodiments, in order to reduce the performance consumption of decoding, an audio package may be parsed at intervals (such as 1 second) to obtain the volume value. The conference media forwarding server switches media. The conference media server sets an input source and an output destination of a switcher, and the input source and the output destination may be multiple in number. The received terminal code stream is input to the switcher as an input source, and the switcher sends the code stream, i.e., the input source to all the output destination terminals. When a broadcast source needs to be switched, only the input source needs to be switched. In order to achieve a smooth switching, it is generally necessary to wait until an I frame of a new input source is received before switching to a new source.

The uplink module of the terminal in Fig. 4 includes an acquisition module, an audio encoding module, a video encoding module, an encoding control module and a packaging and sending module. The collection module collects audios and videos of a terminal device, and sends the collected audios and videos respectively to the audio encoding module and the video encoding module for encoding. For which formats and code stream plans need to be selected, the encoding control module receives the control from the conference media forwarding server, and sends the encoded code streams to the packaging module and then to the conference media forwarding server. The packaging and sending module packages the audio code streams and video code streams, multiplexes the audio code streams and video code streams respectively, and sends the multiplexed audio code streams and video code streams to the conference media forwarding server.

The downlink module of the terminal in Fig. 5 includes a data receiving module, a decoding adaptive module, an audio decoding module, a video decoding module and an output module. The data receiving module receives the code streams from the conference media forwarding server, demultiplexes the audio code streams and the video code streams respectively, then adaptively identifies audio formats and video formats, informs the audio decoding module and the video decoding module to perform decoding, and sends the decoded code streams to the output module. The output module mixes the decoded audio code streams, performs multi-screen layout on the decoded video data, and then presents audios and videos synchronously.

The conference media forwarding server in Fig. 6 includes a code stream receiving module, an audio forwarding module, a video forwarding module and a code stream sending module. The code stream receiving module receives uplink code streams of the terminal, demultiplexes audio code streams and video code streams, and parses the audio code streams and video code streams into streams with different formats and different code stream plans. The streams parsed from audio code streams are sent to the audio forwarding module, and the streams parsed from video code streams are sent to the video forwarding module. The audio forwarding module acquires volume values of the received audio streams, sorts the volume values of all streams in the conference to acquire top three terminals with the loudest sound, and sends the audio code streams of the three terminals to the code stream sending module. According to feedback of the receiving module of a terminal and network conditions, the best audio sent to this terminal is preferably sent to a code stream source terminal through the audio code stream control module. The video forwarding module forwards the received video streams to a code stream switching module and then the video streams are sent to the code stream sending module, or the video forwarding module directly sends the video streams to the code stream sending module. According to the feedback of the receiving module of the terminal and network conditions, the best video format and code stream plan sent to this terminal are preferably sent to the code stream source terminal through the video code stream control module. The code stream sending module multiplexes a plurality of streams with different formats and different code stream plans, and sends the streams to the terminal.

Fig. 7 shows a model in which terminals send code streams to a conference media forwarding server for forwarding, including four video terminals UE1 to UE4 and one conference media forwarding server. The terminal UE1 encodes an audio into two channels of audio streams with G711 and EVS formats, and encodes a video into video streams with H264 180P, H264 720P, H265 1080P and H265 4K plans, and sends the audio streams and the video streams to the conference media forwarding server. The conference media forwarding server forwards the code streams according to terminal capabilities and network conditions. The audio forwarding module forwards the code stream with the G711 format to UE2 and the code stream with the EVS format to UE3 and UE4. The video forwarding module forwards the code stream with the H264 720P plan to UE2 and forwards the code stream with the H265 4K plan to UE3 and UE4. The UE2, UE3 and UE4 adaptively decode the audio code streams and video code streams.

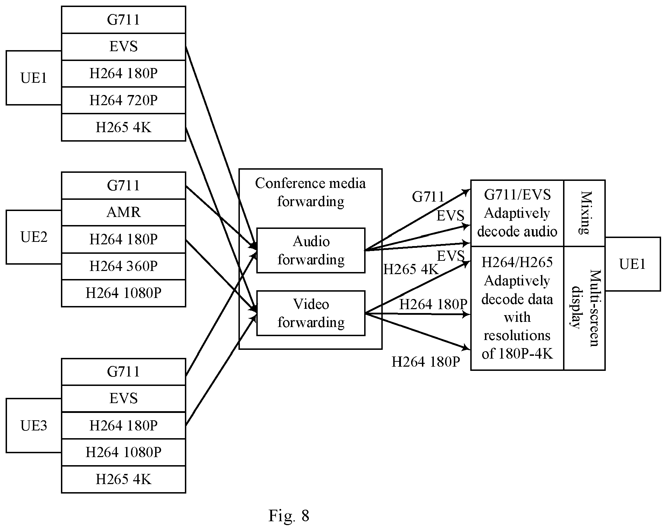

Fig. 8 shows a model in which a conference media forwarding server forwards code streams to terminals, including four video terminals UE1 to UE4and one conference media forwarding server. The terminal UE1 encodes an audio into audio streams with EVS and G711 formats, and encodes a video into video streams with H265 4K, H264 180P and H264 720P plans. The terminal UE2 encodes an audio into audio streams with G711 and AMR formats, and encodes a video into video streams with H264 180P, H264 360P and H264 1080P plans. The terminal UE3 encodes an audio into audio streams with G711 and EVS formats, and encodes a video into video streams with H264 180P, H264 1080P and H265 4K plans. The conference media forwarding server forwards the code streams according to terminal capabilities and network conditions. The audio forwarding module forwards the code stream with the EVS format of UE1, the code stream with the G711 format of UE2 and the code stream with the G711 format of UE3 to UE4. The video forwarding module forwards the code stream with the H265 4K plan of UE1, the code stream with the H264 180P plan of UE2 and the code stream with the H264 180P plan of UE3 to UE4. UE4 adaptively decodes the audio code streams and video code streams, and performs mixing and multi-screen display.

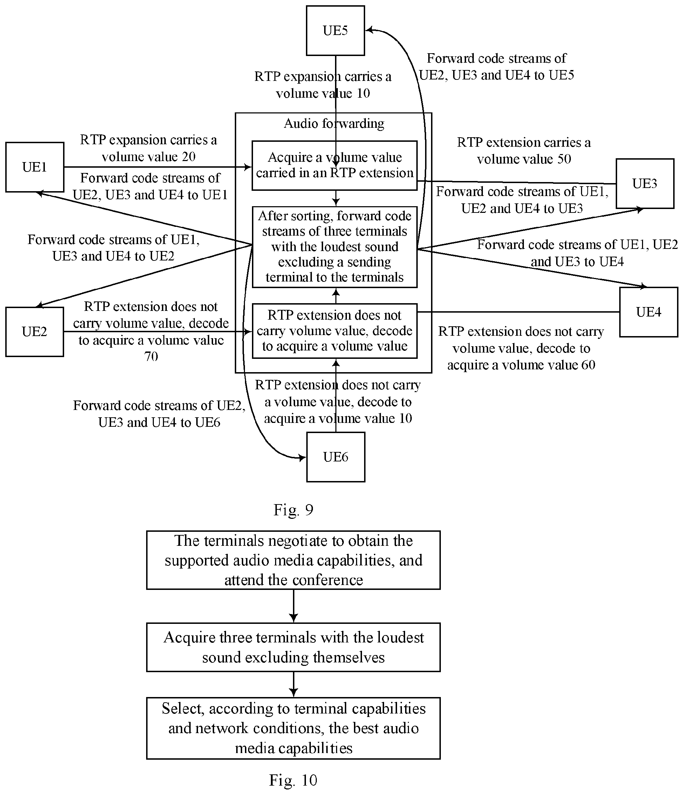

Fig. 9 shows a flowchart of sorting and forwarding of terminal audio volume values, including six video terminals UE1 to UE6 and one conference media forwarding server. The terminals E1, UE3, and UE5 carry volume values in an RTP extension, while the terminals UE2, UE4, and UE6 do not carry volume values. The audio forwarding receives audio streams of the six terminals, acquires volume values in the RTP extension of UE1, UE3 and UE5, and acquires volume values of UE2, UE4 and UE6 after the code streams are decoded. Then, the volume values of the six terminals are sorted to obtain four terminals with the loudest sound as UE2, UE4, UE3, and UE1. The audio streams of three terminals with the loudest sound excluding a sending terminal are forwarded to UE1 to UE4 respectively, that is to say, even if the volume value of an audio stream sent by a terminal is the largest, the terminal will not receive the audio stream because the audio stream is sent by the terminal itself. The audio streams of UE2, UE3 and UE4 are forwarded to UE5 and UE6.

Fig. 10 shows a flow of active stream pushing of a preferred audio of a conference media forwarding server. The terminals negotiate to obtain the supported audio media capabilities, and then attend the conference. The conference media forwarding server acquires the three terminals with the loudest sound. Then, according to terminal capabilities and network conditions, the best audio media capabilities of three terminals with the loudest sound are selected and forwarded to the terminals.

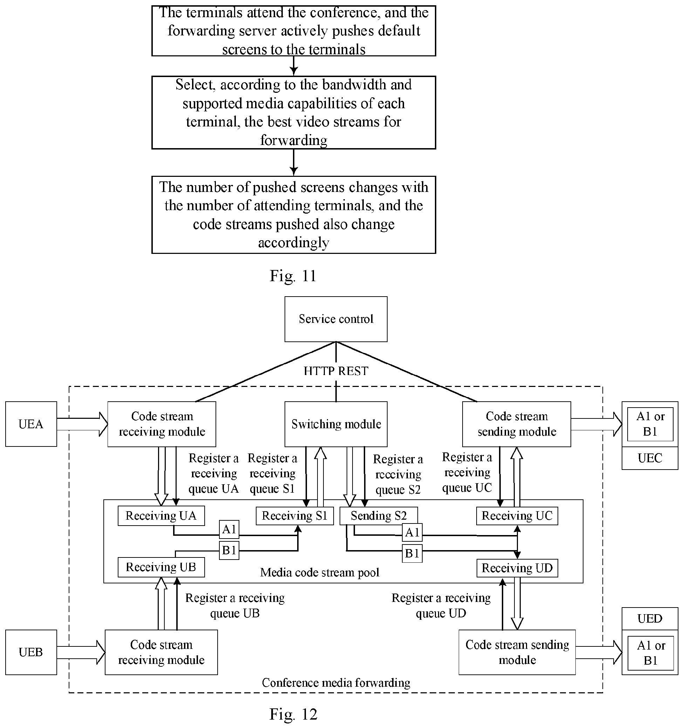

Fig. 11 shows a flowchart of active stream pushing of a preferred video of a conference media forwarding server. After the terminals attend the conference, according to the order of attending, the conference media forwarding server actively pushes default screens to the terminals. Then, according to the capabilities of each terminal and network conditions, the best video code streams are selected and forwarded to the terminals. The number of pushed screens changes with the number of attending terminals, and the best code streams pushed also change accordingly.

Fig. 12 shows a flowchart of switching and forwarding of a media source, including four video terminals UEA-UED, a service control and a conference media forwarding server. After the UEA and UEB attend the conference, the service control controls, through an HTTP REST interface, the conference media forwarding server to receive code streams, code stream receiving modules of the UEA and UEB register code stream receiving queues respectively, and terminal uplink code streams flow to a media code stream pool respectively. After the UEC and UED attend the conference, the service control controls, through the HTTP REST interface, the conference media forwarding server to send code streams, and code stream sending modules of the UEC and UED register code stream receiving queues respectively. The service control controls, through the HTTP REST interface, the switching module to receive the code stream of the UEA, and sends the code stream to the UEC and UED. The switching module registers a receiving queue to receive the code stream of the UEA, and registers a sending queue to send the code stream to the receiving queues of the UEC and UED respectively. The code stream sending modules of the UEC and UED receive the code stream and then forward the code stream to the UEC and UED. When it is required to switch the code stream of the UEA sent to the UEC and UED to the code stream of the UEB, the service control controls, through the HTTP REST interface, to change the reception of the switching module from the UEA to the UEB, and then informs the code stream receiving module to stop sending the code stream of the UEA and start sending the code stream of the UEB. The receiving queue S1 receives A1 and B1, and the sending queue S2 sends A1 and B 1.

Through the description of the above implementations, those having ordinary skills in the art can clearly understand that the method according to the above embodiments may be implemented with the help of software and necessary general hardware platform, and of course may also be implemented by hardware, but in many cases the former is a better implementation. Based on this understanding, the technical schemes of the present disclosure essentially or the part that contributes to some situations can be embodied in the form of a software product. The computer software product is stored in a storage medium (for example, ROM/RAM, magnetic disc, or optical disc), and includes several instructions for instructing a terminal device (which may be a mobile phone, a computer, a server, a network device, or the like) to perform the method in any one of the embodiments of the present disclosure.

In an embodiment, after sending the first target video stream and the first target audio stream to the first receiving terminal, the method further includes: monitoring the terminal parameter of the first receiving terminal and the network bandwidth utilized by the first receiving terminal; and in the case where the network bandwidth or the terminal parameter changes, re-determining the first target video stream and the first target audio stream.

In an embodiment, after re-determining the first target video stream and the first target audio stream, the method further includes: sending the re-determined first target video stream and first target audio stream to the first receiving terminal.

In an embodiment, the method further includes: determining a second target video stream from the plurality of first video streams and a second target audio stream from the plurality of first audio streams according to a network bandwidth utilized by a second receiving terminal and a terminal parameter of the second receiving terminal, where the second target video stream is a video stream with the highest resolution supported for playing by the second receiving terminal among the plurality of first video streams, the second target audio stream is an audio stream with the best sound quality supported for playing by the second receiving terminal among the plurality of first audio streams, and the second receiving terminal is a terminal performing a session with the first sending terminal and the first receiving terminal; and sending the second target video stream and the second target audio stream to the second receiving terminal.

In an embodiment, after sending the second target video stream and the second target audio stream to the second receiving terminal, the method further includes: monitoring the network bandwidth utilized by the second receiving terminal and the terminal parameter; and in the case where the network bandwidth utilized by the second receiving terminal or the terminal parameter changes, re-determining the second target video stream and the second target audio stream.

In an embodiment, after re-determining the second target video stream and the second target audio stream, the method further includes: sending the re-determined second target video stream and second target audio stream to the second receiving terminal.

In an embodiment, the method further includes: acquiring a plurality of second video streams and a plurality of second audio streams sent by a second sending terminal, where different second video streams have different formats or resolutions, contents corresponding to the plurality of second video streams are identical, different second audio streams have different formats, contents corresponding to the plurality of second audio streams are identical, and the second sending terminal is a terminal performing a session with the first sending terminal and the first receiving terminal; determining a third target video stream from the plurality of second video streams and a third target audio stream from the plurality of second audio streams according to the terminal parameter of the first receiving terminal and the network bandwidth utilized by the first receiving terminal, where the third target video stream is a video stream with the highest resolution supported for playing by the first receiving terminal among the plurality of second video streams, and the third target audio stream is an audio stream with the best sound quality supported for playing by the first receiving terminal among the plurality of second audio streams; and sending the third target video stream and the third target audio stream to the first receiving terminal.

In an embodiment, after sending the third target video stream and the third target audio stream to the first receiving terminal, the method further includes: monitoring the network bandwidth utilized by the first receiving terminal and the terminal parameter; and in the case where the network bandwidth utilized by the first receiving terminal or the terminal parameter changes, re-determining the third target video stream and the third target audio stream.

In an embodiment, after re-determining the third target video stream and the third target audio stream, the method further includes: sending the re-determined third target video stream and third target audio stream to the first receiving terminal.

In an embodiment, the method further includes: determining a fourth target video stream from the plurality of second video streams and a fourth target audio stream from the plurality of second audio streams according to a network bandwidth utilized by a second receiving terminal and the terminal parameter of the second receiving terminal, where the fourth target video stream is a video stream with the highest resolution supported for playing by the second receiving terminal among the plurality of second video streams, the fourth target audio stream is an audio stream with the best sound quality supported for playing by the second receiving terminal among the plurality of second audio streams, and the second receiving terminal is a terminal performing a session with the first sending terminal, the first receiving terminal and the second sending terminal; and sending the fourth target video stream and the fourth target audio stream to the second receiving terminal.

In an embodiment, after sending the fourth target video stream and the fourth target audio stream to the second receiving terminal, the method further includes: monitoring the network bandwidth utilized by the second receiving terminal and the terminal parameter; and in the case where the network bandwidth utilized by the second receiving terminal or the terminal parameter changes, re-determining the fourth target video stream and the fourth target audio stream.

In an embodiment, after re-determining the fourth target video stream and the fourth target audio stream, the method further includes: sending the re-determined fourth target video stream and fourth target audio stream to the second receiving terminal.

In an embodiment, the method further includes: in the case where a plurality of target video streams and a plurality of target audio streams are acquired, sending the plurality of target video streams to each of the receiving terminals during the session, and sending N target audio streams with the loudest sound among the plurality of target audio streams to each receiving terminal, where N is a positive integer and is determined according to the number of the target audio streams, the target video streams include the first target video stream, the target audio streams include the first target audio stream, and the receiving terminals includes the first receiving terminal.

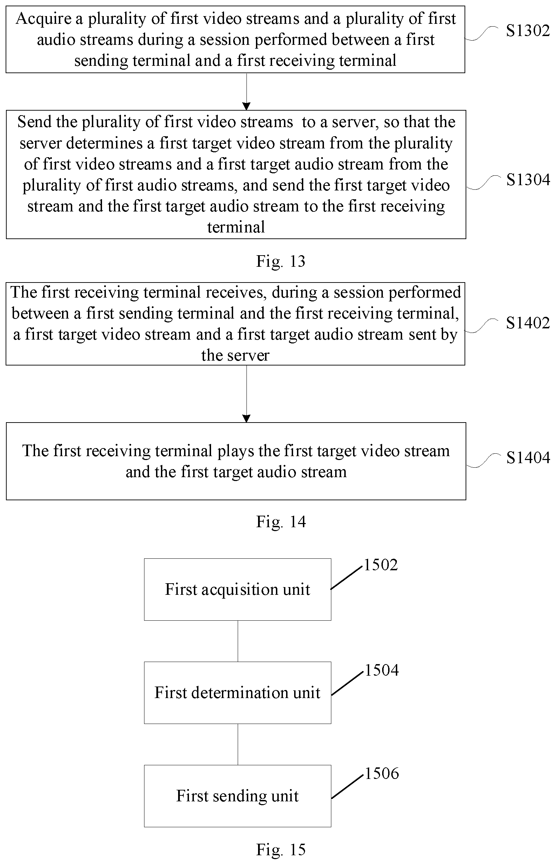

This embodiment further provides an audio/video forwarding method, as shown in Fig. 13, including following steps S1302 to S 1304.

At S 1302, a plurality of first video streams and a plurality of first audio streams are acquired during a session performed between a first sending terminal and a first receiving terminal, where different first video streams have different formats or resolutions, contents corresponding to the plurality of first video streams are identical, different first audio streams have different formats, and contents corresponding to the plurality of first audio streams are identical.

At S1304, the plurality of first video streams are sent to a server, so that the server determines a first target video stream from the plurality of first video streams and a first target audio stream from the plurality of first audio streams, and the first target video stream and the first target audio stream are sent to the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

By means of the present disclosure, because in the process of forwarding a video of the first sending terminal, a plurality of first video streams with different formats and resolutions sent by the first sending terminal and a plurality of first audio streams with different formats sent by the first sending terminal may be acquired, and which video stream and which audio stream are sent to the first receiving terminal can be determined according to a terminal parameter of the first receiving terminal and a network bandwidth utilized by the first receiving terminal, it can be guaranteed that the first receiving terminal plays the best video stream and audio stream that can be supported, solving the problem of not being able to play a video in a video conference, and achieving the effect of improving the stability of the video conference. For other examples of this embodiment, reference may be made to the above examples, which will not be repeated here.

In an embodiment, before acquiring the plurality of first video streams and the plurality of first audio streams, the method further includes: acquiring a video encoding format, a video encoding resolution and an audio encoding format from the server; and encoding original video streams and original audio streams according to the video encoding format, the video encoding resolution and the audio encoding format to obtain the plurality of first video streams and the plurality of first audio streams.

This embodiment further provides an audio/video forwarding method, as shown in Fig. 14, including following steps S 1402 to S 1404.

At S 1402, during a session performed between a first sending terminal and a first receiving terminal, the first receiving terminal receives a first target video stream and a first target audio stream sent by a server, where the first target video stream is a video stream determined by the server from a plurality of first video streams, the first target audio stream is an audio stream determined from a plurality of first audio streams, the first target video stream is a video stream with the highest resolution supported for playing by the first receiving terminal among the plurality of first video streams, the first target audio stream is an audio stream with the best sound quality supported for playing by the first receiving terminal among the plurality of first audio streams, different first video streams have different formats or resolutions, contents corresponding to the plurality of first video streams are identical, the plurality of first audio streams are audio streams sent to the server by the first sending terminal, different first audio streams have different formats, and contents corresponding to the plurality of first audio streams are identical.

At S 1404, the first receiving terminal plays the first target video stream and the first target audio stream.

By means of the present disclosure, because in the process of forwarding a video of the first sending terminal, a plurality of first video streams with different formats and resolutions sent by the first sending terminal and a plurality of first audio streams with different formats sent by the first sending terminal can be acquired, and which video stream and which audio stream are sent to the first receiving terminal can be determined according to a terminal parameter of the first receiving terminal and a network bandwidth utilized by the first receiving terminal, it can be guaranteed that the first receiving terminal plays the best video stream and audio stream that can be supported, solving the problem of not being able to play a video in a video conference, and achieving the effect of improving the stability of the video conference. For other examples of this embodiment, reference may be made to the above examples, which will not be repeated here.

In an embodiment, the method further includes: receiving, by the first receiving terminal, a third target video stream and a third target audio stream sent by the server, where the third target video stream is a video stream determined by the server from a plurality of second video streams, the third target audio stream is an audio stream determined from a plurality of second audio streams, the third target video stream is a video stream with the highest resolution supported for playing by the first receiving terminal among the plurality of second video streams, the third target audio stream is an audio stream with the best sound quality supported for playing by the first receiving terminal among the plurality of second audio streams, different second video streams have different formats or resolutions, contents corresponding to the plurality of second video streams are identical, the plurality of second audio streams are audio streams sent to the server by the first sending terminal, different second audio streams have different formats, and contents corresponding to the plurality of second audio streams are identical; and playing, by the first receiving terminal, the third target video stream and the third target audio stream.

In an embodiment, playing, by the first receiving terminal, the third target video stream includes: stopping playing, by the first receiving terminal, the first target video stream, and playing, by the first receiving terminal, the third target video stream.

In an embodiment, playing, by the first receiving terminal, the third target video stream includes: playing, by the first receiving terminal, the first target video stream in a first playing area, and playing, by the first receiving terminal, the third target video stream in a second playing area.

In an embodiment, the method further includes: in the case where the first receiving terminal receives a plurality of target audio streams, mixing the plurality of target audio streams into one audio stream, where the target audio streams include the first target audio stream; and the first receiving terminal plays the audio stream obtained by mixing.

In an embodiment, playing, by the first receiving terminal, the first target video stream and the first target audio stream includes: performing, by the first receiving terminal, a synchronization operation on the first target video stream and the first target audio stream; and playing, by the first receiving terminal, the synchronized first target video stream and first target audio stream.

This embodiment further provides an audio/video forwarding device, as shown in Fig. 15, including: a first acquisition unit 1502, a first determination unit 1504 and a first sending unit 1506.

The first acquisition unit 1502 is configured to acquire, during a session performed between a first sending terminal and a first receiving terminal, a plurality of first video streams and a plurality of first audio streams sent by the first sending terminal, where different first video streams have different formats or resolutions, contents corresponding to the plurality of first video streams are identical, different first audio streams have different formats, and contents corresponding to the plurality of first audio streams are identical.

The first determination unit 1504 is configured to determine a first target video stream from the plurality of first video streams and a first target audio stream from the plurality of first audio streams according to a terminal parameter of the first receiving terminal and a network bandwidth utilized by the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

The first sending unit 1506 is configured to send the first target video stream and the first target audio stream to the first receiving terminal.

By means of the present disclosure, because in the process of forwarding a video of the first sending terminal, a plurality of first video streams with different formats and resolutions sent by the first sending terminal and a plurality of first audio streams with different formats sent by the first sending terminal can be acquired, and which video stream and which audio stream are sent to the first receiving terminal can be determined according to a terminal parameter of the first receiving terminal and a network bandwidth utilized by the first receiving terminal, it can be guaranteed that the first receiving terminal plays the best video stream and audio stream that can be supported, solving the problem of not being able to play a video in a video conference, and achieving the effect of improving the stability of the video conference. For other examples of this embodiment, reference may be made to the above examples, which will not be repeated here.

In an embodiment, the device further includes: a first monitoring unit, configured to monitor the terminal parameter of the first receiving terminal and the network bandwidth utilized by the first receiving terminal after the first target video stream and the first target audio stream are sent to the first receiving terminal; and a second determination unit, configured to re-determine the first target video stream and the first target audio stream in the case where the network bandwidth or the terminal parameter changes.

In an embodiment, the device further includes: a second sending unit, configured to send the re-determined first target video stream and first target audio stream to the first receiving terminal after the first target video stream and the first target audio stream are re-determined.

In an embodiment, the device further includes: a third determination unit, configured to determine a second target video stream from the plurality of first video streams and a second target audio stream from the plurality of first audio streams according to a network bandwidth utilized by a second receiving terminal and a terminal parameter of the second receiving terminal, where the second target video stream is a video stream with the highest resolution supported for playing by the second receiving terminal among the plurality of first video streams, the second target audio stream is an audio stream with the best sound quality supported for playing by the second receiving terminal among the plurality of first audio streams, and the second receiving terminal is a terminal performing a session with the first sending terminal and the first receiving terminal; and a third sending unit, configured to send the second target video stream and the second target audio stream to the second receiving terminal.

In an embodiment, the device further includes: a second monitoring unit, configured to monitor the network bandwidth utilized by the second receiving terminal and the terminal parameter after the second target video stream and the second target audio stream are sent to the second receiving terminal; and a fourth determination unit, configured to re-determine the second target video stream and the second target audio stream in the case where the network bandwidth utilized by the second receiving terminal or the terminal parameter changes.

In an embodiment, the device further includes: a fourth sending unit, configured to send the re-determined second target video stream and second target audio stream to the second receiving terminal after the second target video stream and the second target audio stream are re-determined.

In an embodiment, the device further includes: a second acquisition unit, configured to acquire a plurality of second video streams and a plurality of second audio streams sent by a second sending terminal, where different second video streams have different formats or resolutions, contents corresponding to the plurality of second video streams are identical, different second audio streams have different formats, contents corresponding to the plurality of second audio streams are identical, and the second sending terminal is a terminal performing a session with the first sending terminal and the first receiving terminal; a fifth determination unit, configured to determine a third target video stream from the plurality of second video streams and a third target audio stream from the plurality of second audio streams according to the terminal parameter of the first receiving terminal and the network bandwidth utilized by the first receiving terminal, where the third target video stream is a video stream with the highest resolution supported for playing by the first receiving terminal among the plurality of second video streams, and the third target audio stream is an audio stream with the best sound quality supported for playing by the first receiving terminal among the plurality of second audio streams; and a fifth sending unit, configured to send the third target video stream and the third target audio stream to the first receiving terminal.

In an embodiment, the device further includes: a third monitoring unit, configured to monitor the network bandwidth utilized by the first receiving terminal and the terminal parameter after the third target video stream and the third target audio stream are sent to the first receiving terminal; and a sixth determination unit, configured to re-determine the third target video stream and the third target audio stream in the case where the network bandwidth utilized by the first receiving terminal or the terminal parameter changes.

In an embodiment, the device further includes: a sixth sending unit, configured to send the re-determined third target video stream and third target audio stream to the first receiving terminal after the third target video stream and the third target audio stream are re-determined.

In an embodiment, the device further includes: a seventh determination unit, configured to determine a fourth target video stream from the plurality of second video streams and a fourth target audio stream from the plurality of second audio streams according to a network bandwidth utilized by a second receiving terminal and a terminal parameter of the second receiving terminal, where the fourth target video stream is a video stream with the highest resolution supported for playing by the second receiving terminal among the plurality of second video streams, the fourth target audio stream is an audio stream with the best sound quality supported for playing by the second receiving terminal among the plurality of second audio streams, and the second receiving terminal is a terminal performing a session with the first sending terminal, the first receiving terminal and the second sending terminal; and a seventh sending unit, configured to send the fourth target video stream and the fourth target audio stream to the second receiving terminal.

In an embodiment, the device further includes: a fourth monitoring unit, configured to monitor the network bandwidth utilized by the second receiving terminal and the terminal parameter after the fourth target video stream and the fourth target audio stream are sent to the second receiving terminal; and an eighth determination unit, configured to re-determine the fourth target video stream and the fourth target audio stream in the case where the network bandwidth utilized by the second receiving terminal or the terminal parameter changes.

In an embodiment, the device further includes: an eighth sending unit, configured to send the re-determined fourth target video stream and fourth target audio stream to the second receiving terminal after the fourth target video stream and the fourth target audio stream are re-determined.

In an embodiment, the device further includes: a ninth sending unit, configured to, in the case where a plurality of target video streams and a plurality of target audio streams are acquired, send the plurality of target video streams to each of the receiving terminals during the session, and send N target audio streams with the loudest sound among the plurality of target audio streams to each of the receiving terminals, where N is a positive integer and is determined according to the number of the target audio streams, the target video streams include the first target video stream, the target audio streams include the first target audio stream, and the receiving terminals includes the first receiving terminal.

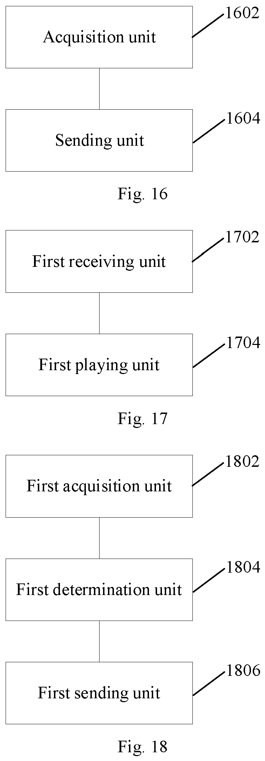

This embodiment further provides an audio/video forwarding device, as shown in Fig. 16, including: an acquisition unit 1602 and a sending unit 1604.

The acquisition unit 1602 is configured to acquire a plurality of first video streams and a plurality of first audio streams during a session performed between a first sending terminal and a first receiving terminal, where different first video streams have different formats or resolutions, contents corresponding to the plurality of first video streams are identical, different first audio streams have different formats, and contents corresponding to the plurality of first audio streams are identical.

The sending unit 1604 is configured to send the plurality of first video streams to a server, so that the server determines a first target video stream from the plurality of first video streams and a first target audio stream from the plurality of first audio streams, and send the first target video stream and the first target audio stream to the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

By means of the present disclosure, because in the process of forwarding a video of the first sending terminal, a plurality of first video streams with different formats and resolutions sent by the first sending terminal and a plurality of first audio streams with different formats sent by the first sending terminal can be acquired, and which video stream and which audio stream are sent to the first receiving terminal can be determined according to a terminal parameter of the first receiving terminal and a network bandwidth utilized by the first receiving terminal, it can be guaranteed that the first receiving terminal plays the best video stream and audio stream that can be supported, solving the problem of not being able to play a video in a video conference, and achieving the effect of improving the stability of the video conference. For other examples of this embodiment, reference may be made to the above examples, which will not be repeated here.

In an embodiment, the device further includes: a receiving unit, configured to acquire a video encoding format, a video encoding resolution and an audio encoding format from the server before the plurality of first video streams and the plurality of first audio streams are acquired; and an encoding unit, configured to encode original video streams and original audio streams according to the video encoding format, the video encoding resolution and the audio encoding format to obtain the plurality of first video streams and the plurality of first audio streams.

This embodiment further provides an audio/video forwarding device, as shown in Fig. 17, including: a first receiving unit 1702 and a first playing unit 1704.

The first receiving unit 1702 is configured to receive a first target video stream and a first target audio stream sent by a server during a session performed between a first sending terminal and a first receiving terminal, where the first target video stream is a video stream determined by the server from a plurality of first video streams, the first target audio stream is an audio stream determined by the server from a plurality of first audio streams, the first target video stream is a video stream with the highest resolution supported for playing by the first receiving terminal among the plurality of first video streams, the first target audio stream is an audio stream with the best sound quality supported for playing by the first receiving terminal among the plurality of first audio streams, different first video streams have different formats or resolutions, contents corresponding to the plurality of first video streams are identical, the plurality of first audio streams are audio streams sent to the server by the first sending terminal, different first audio streams have different formats, and contents corresponding to the plurality of first audio streams are identical.

The first playing unit 1704 is configured to play the first target video stream and the first target audio stream for the first receiving terminal.

By means of the present disclosure, because in the process of forwarding a video of the first sending terminal, a plurality of first video streams with different formats and resolutions sent by the first sending terminal and a plurality of first audio streams with different formats sent by the first sending terminal can be acquired, and which video stream and which audio stream are sent to the first receiving terminal can be determined according to a terminal parameter of the first receiving terminal and a network bandwidth utilized by the first receiving terminal, it can be guaranteed that the first receiving terminal plays the best video stream and audio stream that can be supported, solving the problem of not being able to play a video in a video conference, and achieving the effect of improving the stability of the video conference. For other examples of this embodiment, reference may be made to the above examples, which will not be repeated here.

In an embodiment, the device further includes: a second receiving unit, configured to receive a third target video stream and a third target audio stream sent by the server, where the third target video stream is a video stream determined by the server from a plurality of second video streams, the third target audio stream is an audio stream determined from a plurality of second audio streams, the third target video stream is a video stream with the highest resolution supported for playing by the first receiving terminal among the plurality of second video streams, the third target audio stream is an audio stream with the best sound quality supported for playing by the first receiving terminal among the plurality of second audio streams, different second video streams have different formats or resolutions, contents corresponding to the plurality of first video streams are identical, the plurality of first audio streams are audio streams sent to the server by the first sending terminal, different first audio streams have different formats, and contents corresponding to the plurality of first audio streams are identical; and a second playing unit, configured to play the third target video stream and the third target audio stream for the first receiving terminal.

In an embodiment, the second playing unit includes: a first playing module configured to stop playing the first target video stream, and play the third target video stream for the first receiving terminal.

In an embodiment, the second playing unit includes: a second playing module configured to play the first target video stream in a first playing area, and play the third target video stream in a second playing area for the first receiving terminal.

In an embodiment, the device further includes: a mixing unit, configured to, in the case where the first receiving terminal receives a plurality of target audio streams, mix the plurality of target audio streams into one audio stream, where the target audio streams include the first target audio stream; and a third playing unit, configured to play the audio stream obtained by mixing.

In an embodiment, the first playing unit includes: a synchronization module, configured to perform a synchronization operation on the first target video stream and the first target audio stream; and a third playing module, configured to play the synchronized first target video stream and first target audio stream.

This embodiment further provides an audio/video forwarding system, as shown in Fig. 18, including: a first acquisition unit 1802, a first determination unit 1804 and a first sending unit 1806.

The first acquisition unit 1802 is configured to acquire, during a session performed between a first sending terminal and a first receiving terminal, a plurality of first video streams and a plurality of first audio streams sent by the first sending terminal, where different first video streams have different formats or resolutions, contents corresponding to the plurality of first video streams are identical, different first audio streams have different formats, and contents corresponding to the plurality of first audio streams are identical.

The first determination unit 1804 is configured to determine a first target video stream from the plurality of first video streams and a first target audio stream from the plurality of first audio streams according to a terminal parameter of the first receiving terminal and a network bandwidth utilized by the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

The first sending unit 1806 is configured to send the first target video stream and the first target audio stream to the first receiving terminal.

By means of the present disclosure, because in the process of forwarding a video of the first sending terminal, a plurality of first video streams with different formats and resolutions sent by the first sending terminal and a plurality of first audio streams with different formats sent by the first sending terminal can be acquired, and which video stream and which audio stream are sent to the first receiving terminal can be determined according to a terminal parameter of the first receiving terminal and a network bandwidth utilized by the first receiving terminal, it can be guaranteed that the first receiving terminal plays the best video stream and audio stream that can be supported, solving the problem of not being able to play a video in a video conference, and achieving the effect of improving the stability of the video conference. For other examples of this embodiment, reference may be made to the above examples, which will not be repeated here.

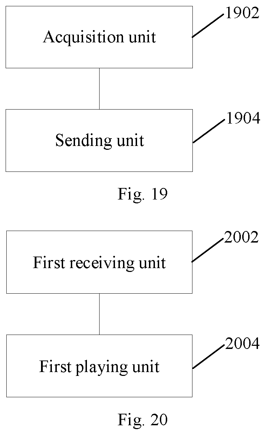

This embodiment further provides an audio/video forwarding terminal, as shown in Fig. 19, including: an acquisition unit 1902 and a sending unit 1904.

The acquisition unit 1902 is configured to acquire a plurality of first video streams and a plurality of first audio streams during a session performed between a first sending terminal and a first receiving terminal, where different first video streams have different formats or resolutions, contents corresponding to the plurality of first video streams are identical, different first audio streams have different formats, and contents corresponding to the plurality of first audio streams are identical.

The sending unit 1904 is configured to send the plurality of first video streams to a server, so that the server determines a first target video stream from the plurality of first video streams and a first target audio stream from the plurality of first audio streams, and send the first target video stream and the first target audio stream to the first receiving terminal, where the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

By means of the present disclosure, because in the process of forwarding a video of the first sending terminal, a plurality of first video streams with different formats and resolutions sent by the first sending terminal and a plurality of first audio streams with different formats sent by the first sending terminal can be acquired, and which video stream and which audio stream are sent to the first receiving terminal can be determined according to a terminal parameter of the first receiving terminal and a network bandwidth utilized by the first receiving terminal, it can be guaranteed that the first receiving terminal plays the best video stream and audio stream that can be supported, solving the problem of not being able to play a video in a video conference, and achieving the effect of improving the stability of the video conference. For other examples of this embodiment, reference may be made to the above examples, which will not be repeated here.

This embodiment further provides an audio/video forwarding terminal, as shown in Fig. 20, including: a first receiving unit 2002 and a first playing unit 2004.

The first receiving unit 2002 is configured to receive a first target video stream and a first target audio stream sent by a server during a session performed between a first sending terminal and a first receiving terminal, where the first target video stream is a video stream determined by the server from a plurality of first video streams, the first target audio stream is an audio stream determined from a plurality of first audio streams, the first target video stream is a video stream with the highest resolution supported for playing by the first receiving terminal among the plurality of first video streams, the first target audio stream is an audio stream with the best sound quality supported for playing by the first receiving terminal among the plurality of first audio streams, different first video streams have different formats or resolutions, contents corresponding to the plurality of first video streams are identical, the plurality of first audio streams are audio streams sent to the server by the first sending terminal, different first audio streams have different formats, and contents corresponding to the plurality of first audio streams are identical.

The first playing unit 2004 is configured to play the first target video stream and the first target audio stream for the first receiving terminal.

By means of the present disclosure, because in the process of forwarding a video of the first sending terminal, a plurality of first video streams with different formats and resolutions sent by the first sending terminal and a plurality of first audio streams with different formats sent by the first sending terminal can be acquired, and which video stream and which audio stream are sent to the first receiving terminal can be determined according to a terminal parameter of the first receiving terminal and a network bandwidth utilized by the first receiving terminal, it can be guaranteed that the first receiving terminal plays the best video stream and audio stream that can be supported, solving the problem of not being able to play a video in a video conference, and achieving the effect of improving the stability of the video conference. For other examples of this embodiment, reference may be made to the above examples, which will not be repeated here.

An embodiment of the present disclosure further provides a computer-readable storage medium, storing a computer program which, when executed by a processor, causes the processor to implement the above method embodiments.

In an embodiment, the computer-readable storage medium may include, but not limited to, a USB flash disk, a Read-Only Memory (ROM), a Random Access Memory (RAM), a mobile hard disk, a magnetic disc, a compact disc and other media that can store computer programs.

An embodiment of the present disclosure further provides an electronic device, including a memory and a processor. The memory stores a computer program which, when executed by the processor, causes the processor to implement the above method embodiments.

In an embodiment, the electronic device may further include a transmission device and an input/output device. The transmission device is connected to the processor, and the input/output device is connected to the processor.

For specific examples in this embodiment, reference may be made to the examples described in the above embodiments and example implementations, which will not be repeated in this embodiment.

By means of the present disclosure, because in the process of forwarding a video of the first sending terminal, a plurality of first video streams with different formats and resolutions sent by the first sending terminal and a plurality of first audio streams with different formats sent by the first sending terminal can be acquired, and which video stream and which audio stream are sent to the first receiving terminal can be determined according to a terminal parameter of the first receiving terminal and a network bandwidth utilized by the first receiving terminal, it can be guaranteed that the first receiving terminal plays the best video stream and audio stream that can be supported, solving the problem of not being able to play a video in a video conference, and achieving the effect of improving the stability of the video conference.

Obviously, those having ordinary skills in the art should understand that the above-mentioned modules or steps of the present disclosure may be realized by a general computing device, may be concentrated on a single computing device or distributed on a network composed of multiple computing devices, and may be realized by program codes executable by computing devices, so that they can be stored in storage devices and executed by computing devices. Moreover, in some cases, the steps shown or described may be performed in a different order from that shown herein, or may be implemented by making them into individual integrated circuit modules respectively or making a plurality of modules or steps thereof into a single integrated circuit module. In view of the above, the present disclosure is not limited to any particular combination of hardware and software.

All embodiments described above are just some embodiments of the present disclosure and are not intended to limit the present disclosure. It will be apparent to those having ordinary skills in the art that various changes and variations may be made to the present disclosure. Any modification, equivalent replacement, improvement, etc., made within the principle of the present disclosure shall fall within the protection scope of the present disclosure.

## Claims

1. An audio/video forwarding method, comprising:
acquiring, during a session performed between a first sending terminal and a first receiving terminal, a plurality of first video streams and a plurality of first audio streams sent by the first sending terminal, wherein, different first video streams have different formats or resolutions, contents corresponding to the plurality of first video streams are identical, different first audio streams have different formats, and contents corresponding to the plurality of first audio streams are identical;
determining a first target video stream from the plurality of first video streams and a first target audio stream from the plurality of first audio streams according to a terminal parameter of the first receiving terminal and a network bandwidth utilized by the first receiving terminal, wherein the first target video stream is a video stream with the highest resolution supported for playing by the first receiving terminal among the plurality of first video streams, and the first target audio stream is an audio stream with the best sound quality supported for playing by the first receiving terminal among the plurality of first audio streams; and
sending the first target video stream and the first target audio stream to the first receiving terminal.

2. The method of claim 1, wherein after sending the first target video stream and the first target audio stream to the first receiving terminal, the method further comprises:
monitoring the terminal parameter of the first receiving terminal and the network bandwidth utilized by the first receiving terminal; and
in response to a change in the network bandwidth or the terminal parameter, re-determining the first target video stream and the first target audio stream.

3. The method of claim 2, wherein after re-determining the first target video stream and the first target audio stream, the method further comprises:
sending the re-determined first target video stream and first target audio stream to the first receiving terminal.

4. The method of claim 1, further comprising:
determining a second target video stream from the plurality of first video streams and a second target audio stream from the plurality of first audio streams according to a network bandwidth utilized by a second receiving terminal and a terminal parameter of the second receiving terminal, wherein the second target video stream is a video stream with the highest resolution supported for playing by the second receiving terminal among the plurality of first video streams, the second target audio stream is an audio stream with the best sound quality supported for playing by the second receiving terminal among the plurality of first audio streams, and the second receiving terminal is a terminal performing a session with the first sending terminal and the first receiving terminal; and
sending the second target video stream and the second target audio stream to the second receiving terminal.

5. The method of claim 4, wherein after sending the second target video stream and the second target audio stream to the second receiving terminal, the method further comprises:
monitoring the network bandwidth utilized by the second receiving terminal and the terminal parameter; and
in response to a change in the network bandwidth utilized by the second receiving terminal or the terminal parameter, re-determining the second target video stream and the second target audio stream.

6. The method of claim 5, wherein after re-determining the second target video stream and the second target audio stream, the method further comprises:
sending the re-determined second target video stream and second target audio stream to the second receiving terminal.

7. The method of claim 1, further comprising:
acquiring a plurality of second video streams and a plurality of second audio streams sent by a second sending terminal, wherein different second video streams have different formats or resolutions, contents corresponding to the plurality of second video streams are identical, different second audio streams have different formats, contents corresponding to the plurality of second audio streams are identical, and the second sending terminal is a terminal performing a session with the first sending terminal and the first receiving terminal;
determining a third target video stream from the plurality of second video streams and a third target audio stream from the plurality of second audio streams according to the terminal parameter of the first receiving terminal and the network bandwidth utilized by the first receiving terminal, wherein the third target video stream is a video stream with the highest resolution supported for playing by the first receiving terminal among the plurality of second video streams, and the third target audio stream is an audio stream with the best sound quality supported for playing by the first receiving terminal among the plurality of second audio streams; and
sending the third target video stream and the third target audio stream to the first receiving terminal.

8. The method of claim 7, wherein after sending the third target video stream and the third target audio stream to the first receiving terminal, the method further comprises:
monitoring the network bandwidth utilized by the first receiving terminal and the terminal parameter; and
in response to a change in the network bandwidth utilized by the first receiving terminal or the terminal parameter, re-determining the third target video stream and the third target audio stream.

9. The method of claim 8, wherein after re-determining the third target video stream and the third target audio stream, the method further comprises:
sending the re-determined third target video stream and third target audio stream to the first receiving terminal.

10. The method of claim 7, further comprising:
determining a fourth target video stream and a fourth target audio stream from the plurality of second video streams and the plurality of second audio streams according to the network bandwidth utilized by the second receiving terminal and the terminal parameter of the second receiving terminal, wherein the fourth target video stream is a video stream with the highest resolution supported for playing by the second receiving terminal among the plurality of second video streams, the fourth target audio stream is an audio stream with the best sound quality supported for playing by the second receiving terminal among the plurality of second audio streams, and the second receiving terminal is a terminal performing a session with the first sending terminal, the first receiving terminal and the second sending terminal; and
sending the fourth target video stream and the fourth target audio stream to the second receiving terminal.

11. The method of claim 10, wherein after sending the fourth target video stream and the fourth target audio stream to the second receiving terminal, the method further comprises:
monitoring the network bandwidth utilized by the second receiving terminal and the terminal parameter; and
in response to a change in the network bandwidth utilized by the second receiving terminal or the terminal parameter, re-determining the fourth target video stream and the fourth target audio stream.

12. The method of claim 11, wherein after re-determining the fourth target video stream and the fourth target audio stream, the method further comprises:
sending the re-determined fourth target video stream and fourth target audio stream to the second receiving terminal.

13. The method of any one of claims 1 to 12, further comprising:
in response to acquiring a plurality of target video streams and a plurality of target audio streams, sending the plurality of target video streams to each of the receiving terminals during the session, and sending N target audio streams with the loudest sound among the plurality of target audio streams to each of the receiving terminals, wherein N is a positive integer and is determined according to the number of the target audio streams, the target video streams include the first target video stream, the target audio streams include the first target audio stream, and the receiving terminals includes the first receiving terminal.

14. An audio/video forwarding method, comprising:
acquiring a plurality of first video streams and a plurality of first audio streams during a session performed between a first sending terminal and a first receiving terminal, wherein different first video streams have different formats or resolutions, contents corresponding to the plurality of first video streams are identical, different first audio streams have different formats, and contents corresponding to the plurality of first audio streams are identical; and
sending the plurality of first video streams to a server, so that the server determines a first target video stream from the plurality of first video streams and a first target audio stream from the plurality of first audio streams, and sending the first target video stream and the first target audio stream to the first receiving terminal, wherein the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

15. The method of claim 14, wherein prior to acquiring the plurality of first video streams and the plurality of first audio streams, the method further comprises:
acquiring a video encoding format, a video encoding resolution and an audio encoding format from the server; and
encoding original video streams and original audio streams according to the video encoding format, the video encoding resolution and the audio encoding format to obtain the plurality of first video streams and the plurality of first audio streams.

16. An audio/video forwarding method, comprising:
receiving, during a session performed between a first sending terminal and a first receiving terminal, by the first receiving terminal, a first target video stream and a first target audio stream sent by a server, wherein the first target video stream is a video stream determined by the server from a plurality of first video streams, the first target audio stream is an audio stream determined from a plurality of first audio streams, the first target video stream is a video stream with the highest resolution supported for playing by the first receiving terminal among the plurality of first video streams, the first target audio stream is an audio stream with the best sound quality supported for playing by the first receiving terminal among the plurality of first audio streams, different first video streams have different formats or resolutions, contents corresponding to the plurality of first video streams are identical, the plurality of first audio streams are audio streams sent to the server by the first sending terminal, different first audio streams have different formats, and contents corresponding to the plurality of first audio streams are identical; and
playing, by the first receiving terminal, the first target video stream and the first target audio stream.

17. The method of claim 16, further comprising:
receiving, by the first receiving terminal, a third target video stream and a third target audio stream sent by the server, wherein the third target video stream is a video stream determined by the server from a plurality of second video streams, the third target audio stream is an audio stream determined by the server from a plurality of second audio streams, the third target video stream is a video stream with the highest resolution supported for playing by the first receiving terminal among the plurality of second video streams, the third target audio stream is an audio stream with the best sound quality supported for playing by the first receiving terminal among the plurality of second audio streams, different second video streams have different formats or resolutions, contents corresponding to the plurality of second video streams are identical, the plurality of second audio streams are audio streams sent to the server by the first sending terminal, different second audio streams have different formats, and contents corresponding to the plurality of second audio streams are identical; and
playing, by the first receiving terminal, the third target video stream and the third target audio stream.

18. The method of claim 17, wherein playing, by the first receiving terminal, the third target video stream comprises:
stopping playing, by the first receiving terminal, the first target video stream, and playing, by the first receiving terminal, the third target video stream.

19. The method of claim 17, wherein playing, by the first receiving terminal, the third target video stream comprises:
playing, by the first receiving terminal, the first target video stream in a first playing area, and playing, by the first receiving terminal, the third target video stream in a second playing area.

20. The method of claim 16, further comprising:
in response to the first receiving terminal receiving a plurality of target audio streams, mixing the plurality of target audio streams into one audio stream, wherein the target audio streams include the first target audio stream; and
playing, by the first receiving terminal, the audio stream obtained by mixing.

21. The method of claim 16, wherein playing, by the first receiving terminal, the first target video stream and the first target audio stream comprises:
performing, by the first receiving terminal, a synchronization operation on the first target video stream and the first target audio stream; and
playing, by the first receiving terminal, the synchronized first target video stream and first target audio stream.

22. An audio/video forwarding device, comprising:
a first acquisition unit, configured to acquire, during a session performed between a first sending terminal and a first receiving terminal, a plurality of first video streams and a plurality of first audio streams sent by the first sending terminal, wherein different first video streams have different formats or resolutions, contents corresponding to the plurality of first video streams are identical, different first audio streams have different formats, and contents corresponding to the plurality of first audio streams are identical;
a first determination unit, configured to determine a first target video stream from the plurality of first video streams and a first target audio stream from the plurality of first audio streams according to a terminal parameter of the first receiving terminal and a network bandwidth utilized by the first receiving terminal, wherein the first target video stream is a video stream with the highest resolution supported for playing by the first receiving terminal among the plurality of first video streams, and the first target audio stream is an audio stream with the best sound quality supported for playing by the first receiving terminal among the plurality of first audio streams; and
a first sending unit configured to send the first target video stream and the first target audio stream to the first receiving terminal.

23. An audio/video forwarding device, comprising:
an acquisition unit, configured to acquire a plurality of first video streams and a plurality of first audio streams during a session performed between a first sending terminal and a first receiving terminal, wherein different first video streams have different formats or resolutions, contents corresponding to the plurality of first video streams are identical, different first audio streams have different formats, and contents corresponding to the plurality of first audio streams are identical; and
a sending unit, configured to send the plurality of first video streams to a server, so that the server determines a first target video stream from the plurality of first video streams and a first target audio stream from the plurality of first audio streams, and send the first target video stream and the first target audio stream to the first receiving terminal, wherein the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

24. An audio/video forwarding device, comprising:
a first receiving unit, configured to receive a first target video stream and a first target audio stream sent by a server during a session performed between a first sending terminal and a first receiving terminal, wherein the first target video stream is a video stream determined by the server from a plurality of first video streams, the first target audio stream is an audio stream determined from a plurality of first audio streams, the first target video stream is a video stream with the highest resolution supported for playing by the first receiving terminal among the plurality of first video streams, the first target audio stream is an audio stream with the best sound quality supported for playing by the first receiving terminal among the plurality of first audio streams, different first video streams have different formats or resolutions, contents corresponding to the plurality of first video streams are identical, the plurality of first audio streams are audio streams sent to the server by the first sending terminal, different first audio streams have different formats, and contents corresponding to the plurality of first audio streams are identical; and
a first playing unit, configured to play the first target video stream and the first target audio stream for the first receiving terminal.

25. An audio/video forwarding system, comprising:
a first acquisition unit configured to acquire, during a session performed between a first sending terminal and a first receiving terminal, a plurality of first video streams and a plurality of first audio streams sent by the first sending terminal, wherein different first video streams have different formats or resolutions, contents corresponding to the plurality of first video streams are identical, different first audio streams have different formats, and contents corresponding to the plurality of first audio streams are identical;
a first determination unit configured to determine a first target video stream from the plurality of first video streams and a first target audio stream from the plurality of first audio streams according to a terminal parameter of the first receiving terminal and a network bandwidth utilized by the first receiving terminal, wherein the first target video stream is a video stream with the highest resolution supported for playing by the first receiving terminal among the plurality of first video streams, and the first target audio stream is an audio stream with the best sound quality supported for playing by the first receiving terminal among the plurality of first audio streams; and
a first sending unit, configured to send the first target video stream and the first target audio stream to the first receiving terminal.

26. An audio/video forwarding terminal, comprising:
an acquisition unit, configured to acquire a plurality of first video streams and a plurality of first audio streams during a session performed between a first sending terminal and a first receiving terminal, wherein, different first video streams have different formats or resolutions, contents corresponding to the plurality of first video streams are identical, different first audio streams have different formats, and contents corresponding to the plurality of first audio streams are identical; and
a sending unit, configured to send the plurality of first video streams and to a server, so that the server determines a first target video stream from the plurality of first video streams and a first target audio stream from the plurality of first audio streams, and send the first target video stream and the first target audio stream to the first receiving terminal, wherein, the first target video stream is a video stream with the highest resolution supported for playing by the first receiving terminal among the plurality of first video streams, and the first target audio stream is an audio stream with the best sound quality supported for playing by the first receiving terminal among the plurality of first audio streams.

27. An audio/video forwarding terminal, comprising:
a first receiving unit, configured to receive a first target video stream and a first target audio stream sent by a server during a session performed between a first sending terminal and a first receiving terminal, wherein, the first target video stream is a video stream determined by the server from a plurality of first video streams, the first target audio stream is an audio stream determined by the server from a plurality of first audio streams, the first target video stream is a video stream with the highest resolution supported for playing by the first receiving terminal among the plurality of first video streams, the first target audio stream is an audio stream with the best sound quality supported for playing by the first receiving terminal among the plurality of first audio streams, different first video streams have different formats or resolutions, contents corresponding to the plurality of first video streams are identical, the plurality of first audio streams are audio streams sent to the server by the first sending terminal, different first audio streams have different formats, and contents corresponding to the plurality of first audio streams are identical; and
a first playing unit, configured to play the first target video stream and the first target audio stream for the first receiving terminal.

28. A computer-readable storage medium, storing a computer program which, when executed by a processor, causes the processor to perform the method of any one of claims 1 to 13, or 14 to 15, or 16 to 21.

29. An electronic device, comprising a memory, a processor, and a computer program stored in the memory and executable by the processor which, when executed by the processor, causes the processor to perform the method of any one of claims 1 to 13, or 14 to 15, or 16 to 21.
